# EUROPÄISCHE PATENTSCHRIFT

(11) **EP 0 806 826 B1**
(45) Veröffentlichungstag und Bekanntmachung des Hinweises auf die Patenterteilung: **09.04.2003**
(21) Anmeldenummer: 97890078.5
(22) Anmeldetag: 29.04.1997
(51) Int. Cl.: H02H 9/04

(54) **Entkoppelglied für Überspannungsschutz-Schaltung**
Decoupling element for overvoltage protection circuit
Dispositif de découplage pour circuit de protection contre les surtensions

(30) Priorität: 07.05.1996 AT 81296
(43) Veröffentlichungstag der Anmeldung: 12.11.1997
(73) Patentinhaber: Felten & Guilleaume Austria AG, 3943 Schrems (AT)
(72) Erfinder: Suchentrunk, Karl, A-2435 Wienerherberg (AT)
(74) Vertreter: Gibler, Ferdinand, Dipl.Ing. Dr. techn.

(56) Entgegenhaltungen:
- DE-A- 4 236 584
- DE-U- 9 203 347
- DE-U- 9 414 458

## Beschreibung

Die Erfindung betrifft ein Entkoppel-Glied für in Schaltschränke einbaubare Überspannungs-Schutzschaltungen, welche Überspannungs-Schutzschaltungen erste und zweite Ableit-Elemente sowie zwischen den ersten und zweiten Ableit-Elementen liegende erste Entkoppel-Bauelemente umfassen, wobei das Entkoppel-Glied ein Gehäuse aufweist, in welchem zumindest sämtliche ersten Entkoppel-Bauelemente angeordnet sind und gegebenenfalls zumindest ein zweites Entkoppel-Bauelement angeordnet ist.

Zur Absicherung von Netzanschlüssen werden -wie beispielsweise in der **DE-A1-42 36 584** erläutert- häufig pro Phase zwei parallel zueinander geschaltete, voneinander entkoppelte Ableit-Elemente eingesetzt. Das öffentliche Drehstromnetz hat drei spannungsführende Leiter, die alle sowie auch der Neutralleiter gegenüber dem Schutzleiter und untereinander gegen Überspannungen zu schützen sind. Dies bringt einen relativ großen Bauteilaufwand - vier separate Schutzschaltungen- mit sich.

Darüberhinaus sind Überspannungsschutz-Vorrichtungen üblicherweise als erstes in der Anlagenzuleitung angeordnet, sodaß zu ihrer Verdrahtung Leitungen großen Querschnittes verwendet werden müssen, die entsprechend schwierig zu manipulieren sind.

Die beiden Gegebenheiten -große Bauteüanzahl, schwierig zu manipulierende Leitungenführen zusammenfassend zu einer zeitaufwendigen und unübersichtlichen Verdrahtung.

Die **DE-U1-92 03 347** beschreibt ein Überspannungsschutzgerät, das einen auf eine Schaltschrank-Schiene montierbaren Unterteil und einen in diesen einsteckbaren Oberteil aufweist. Im Unterteil sind Eingangsanschlüsse für die Adern der zu schützenden Leitung und Ausgangsanschlüsse für die Adern der geschützten Leitung angeordnet. Sowohl die Eingangsanschlüsse als auch die Ausgangsanschlüsse sind mit im mittleren Abschnitt des Unterteiles angeordneten Steckbuchsen elektrisch verbunden, wobei die hierfür notwendigen Leitungen ebenfalls im Unterteil verlaufen.

Der Oberteil weist zunächst Steckkontakte auf, welche in die Steckbuchsen des Unterteiles eingreifen. Verbunden mit diesen Steckbuchsen ist die Überspannungsschutzschaltung, deren sämtliche Bauteile im Oberteil angeordnet sind. Diese Schutzschaltung ist so ausgestaltet, daß zwischen jeder Ader der zu schützenden Leitung und der Erdung ein Grobschutzelement sowie ein Feinschutzelement geschaltet ist, wobei diese Schutzelemente mittels erster Koppelglieder voneinander entkoppelt sind.

Es ist Aufgabe der Erfindung, eine Möglichkeit der Ausgestaltung eines gattungsgemäßen Entkoppel-Gliedes anzugeben, wodurch eine Überspannungs-Schutzeinrichtung in einem Schaltschrank besonders übersichtlich angeordnet und einfach verdrahtet werden kann.

Erfindungsgemäß wird dies dadurch erreicht, daß das Gehäuse des Entkoppel-Gliedes
- in einer oberen Klemmenreihe liegende Anschlußklemmen,
- in einer unteren Klemmenreihe liegende Anschlußklemmen aufweist,
wobei
jede Klemmenreihe jeweils eine linke äußerste Anschlußklemme und eine rechte äußerste Anschlußklemme aufweist, und
- die äußersten Anschlußklemmen mittels einer im Gehäuseinneren geführten elektrischen Verbindungsleitung verbunden sind.

Durch ein derartig gestaltetes Entkoppel-Glied wird der Bauteilaufwand wesentlich verringert, die elektrische Verbindung der erwähnten Anschlußklemmen mittels der elektrischen Verbindungsleitung macht einige unangenehm zu verlegende Leitungen überflüssig.

In Weiterbildung der Erfindung kann vorgesehen sein, daß das zumindest eine zweite Entkoppel-Bauelement vorgesehen und zusammen mit den ersten Entkoppel-Bauelementen im gemeinsamen Gehäuse angeordnet ist.

Dadurch sind sämtliche Entkoppel-Bauelemente in einem einzigen Gehäuse zusammengefaßt, was eine weitere Vereinfachung des Schaltungs-Aufbaus mit sich bringt.

Nach einer Variante der Erfindung kann vorgesehen sein, daß sowohl die ersten als auch die zweiten Anschlüsse der ersten Entkoppel-Bauelemente auf in der oberen Klemmenreihe liegende Anschlußklemmen des gemeinsamen Gehäuses geführt sind.

Alle zur Weiterverbindung der Entkoppel-Bauelemente notwendigen Leitungen können somit ausschließlich oberhalb des Entkoppelgliedes liegend verlegt werden, was zu einer übersichtlichen und einfach durchzuführenden Verdrahtung führt.

Gemäß einer anderen Ausführungs-Variante der Erfindung kann vorgesehen sein, daß die ersten Anschlüsse der ersten Entkoppel-Bauelemente auf in einer Gehäusevorderwand angeordnete Steckkontakte und die zweiten Anschlüsse der ersten Entkoppel-Bauelemente auf in der oberen Klemmenreihe liegende Anschlußklemmen geführt sind.

Damit kann die Verdrahtung der ersten Anschlüsse der Entkoppel-Bauelemente durch entlang der Gehäusevorderwand verlaufende Steckverbindungen erfolgen, was zu einer weiteren Vereinfachung des Verdrahtungsaufwandes führt.

Weiters kann vorgesehen sein, daß die ersten Anschlüsse der ersten Entkoppel-Bauelemente zusätzlich auch auf in der unteren Klemmenreihe liegende Anschlußklemmen geführt sind.

Diese Ausbildung gestattet eine mit geringem Aufwand verbundene Parallelschaltung mehrerer Entkoppelglieder, wodurch auf einfache Weise der Nennstrom der Überspannungs-Schutzschaltung erhöht werden kann.

Bei einer besonders bevorzugten Ausführungsform der Erfindung kann vorgesehen sein, daß die ersten Entkoppel-Bauelemente durch Spulen gebildet sind, da solche Bauelemente einfach im für diese Anwendung notwendigen Leistungsbereich hergestellt werden können.

In diesem Zusammenhang kann in Weiterbildung der Erfindung vorgesehen sein, daß zumindest ein zweites Entkoppel-Bauelement vorgesehen und dieses durch eine in sich geschlossene Spule, vorzugsweise durch einen induktiven Ring, wie z.B. einen Ferritring, gebildet ist, durch welche Spule sämtliche betriebsstromführende Leiter hindurch geführt sind.

Dadurch kann der Bauteilaufwand vermindert und somit die Gestehungskosten sowie die Funktionszuverlässigkeit des Entkoppelgliedes erhöht werden.

Ein weiteres Ziel der Erfindung ist es, eine Anordnung von Bauelementen einer Überspannungs-Schutzschaltung in einem Schaltkasten anzugeben, bei welcher jeweils zwischen jedem Phasenleiter und dem Neutralleiter bzw. zwischen jedem Phasenleiter und dem Schutzleiter sowie vorzugsweise auch zwischen Neutralleiter und Schutzleiter zwei voneinander entkoppelte Ableit-Elemente geschaltet sind und ein vorstehend beschriebenes Entkoppel-Glied aufweist. Diese Anordung soll mit möglichst wenig Aufwand in einer übersichtlichen Weise verdrahtbar sein.

Erfindungsgemäß wird dies dadurch erreicht, daß sämtliche erste Ableit-Elemente und sämtliche zweite Ableit-Elemente jeweils unmittelbar nebeneinanderliegend zu Gruppen zusammengefaßt angeordnet sind und daß das Entkoppel-Glied zwischen den Gruppen der ersten und der zweiten Ableit-Elemente angeordnet ist.

Dadurch wird erreicht, daß sämtliche Leiter sowohl der Zu- als auch der Ableitung von oben an die Schutzschaltung angeschlossen werden können, was wesentlich zur Übersichtlichkeit der Verdrahtung beiträgt. Durch die erfindungsgemäße Anordnungsweise der einzelnen Schaltungs-Komponenten können diese mit Hilfe von Standard-Verschienungssystemen miteinander verbunden werden, was zu einer einfachen, schnell durchzuführenden Montage führt.

Gemäß einer bevorzugten Ausführungsform der Erfindung kann vorgesehen sein, daß die ersten Anschlüsse der ersten Entkoppel-Bauelemente durch einen entlang von Gehäusevorderwänden von Ableit-Elementen und Entkoppel-Glied verlaufenden Steckverbinder verbindbar sind.

Steckverbindungen sind wesentlich rascher als Schraubverbindungen herstellbar, sodaß sich durch diese Maßnahme eine abermalige Vereinfachung der Montage erreichen läßt.

In diesem Zusammenhang kann in Weiterbildung der Erfindung vorgesehen, daß das zumindest eine zweite Entkoppel-Element im Inneren des Steckverbinders angeordnet ist.

Somit kann im Gehäuse des Entkoppel-Gliedes Platz freigemacht und die ersten Entkoppel-Bauelemente geometrisch größer und damit leistungsfähiger konstruiert werden.

Gemäß einer bevorzugten Ausgestaltung der Erfindung kann vorgesehen sein, daß sämtliche erste Ableit-Elemente mit dem Entkoppel-Glied einstückig ausgebildet sind, was aufgrund des Wegfalls einiger extern herzustellenden Verbindungen von Vorteil ist.

In diesem Zusammenhang kann weiters vorgesehen sein, daß sämtliche erste Ableit-Elemente, Entkoppel-Glied und Steckverbinder einstückig ausgebildet sind.

Dies erlaubt, die Steckverbindungen durch fix verlegte Leitungen zu ersetzen, was geringere Übergangswiderstände zwischen den einzelnen Schaltungs-Komponenten mit sich bringt.

Vorteilhaft kann es sein, daß die ersten Ableit-Elemente durch Entladungsstrecken, wie z.B. Luft-, Gas- oder Vakuumfunkenstrecken od. dgl. gebildet sind, da derartige Elemente relativ hohe Energien unbeschadet ableiten können.

In diesem Zusammenhang kann es weiters von Vorteil sein, daß die zweiten Ableit-Elemente durch Varistoren, Suppressordioden od. dgl. gebildet sind. Solche Bauteile reduzieren eine Überspannung auf einen relativ geringen Wert, wodurch sich ein ausreichender Schutz für allen nachgeschalteten Verbraucher ergibt.

Die Erfindung wird nun unter Bezugnahme auf die Zeichnungen näher erläutert. In den Zeichnungen zeigen:
Fig.1 ein Prinzipschaltbild einer Überspannungs-Schutzschaltung;
Fig.2a,b zwei Möglichkeiten der Realisierung des Prinzips nach Fig.1 in einem Drehstromsystem;
Fig.3 eine in einem Schaltschrank eingebaute Schutzschaltung nach Fig.2a im Aufriß;
Fig.4 einen erfindungsgemäße Aufbau der Schutzschaltung nach Fig.2b in einem Schaltschrank im Aufriß;
Fig.5 eine Vereinfachung des Aufbaues nach Fig.4;
Fig.6a,b das erfindungsgemäße Entkoppel-Glied im Seitenriß;
Fig.7 zwei zueinander parallel geschaltete Entkoppel-Glieder und
Fig.8a,b bis 12a,b Schaltpläne für Überspannungs-Schutzeinrichtungen unterschiedlicher Netz-Systeme und deren Realisierung mit einem erfindungsgemäßen Entkoppelglied.

Zum Schutz von elektrischen Leitungen vor unzulässig hohen Überspannungen, wie sie z.B. bei direktem oder indirektem Blitzeinschlag auftreten können, sind unterschiedliche Bauelemente bekannt. Die wichtigsten sind Entladungsstrecken, Varistoren und Suppressor-Dioden. Sie weisen voneinander verschiedene elektrische -und daher bei Ihrer Auswahl zu berücksichtigende- Eigenschaften auf.
So können Entladungsstrecken besonders energiereiche Überspannungen ableiten, bringen aber den Nachteil einer relativ große Restspannung (=die Spannung, auf die die Überspannung in der Anlage durch die Wirkung von Überspannungs-Schutzschaltungen reduziert wird) mit sich.
Varistoren und Suppressordioden haben dagegen eine vergleichsweise kleine Restspannung, aber nur ein geringes Energieableit-Vermögen.

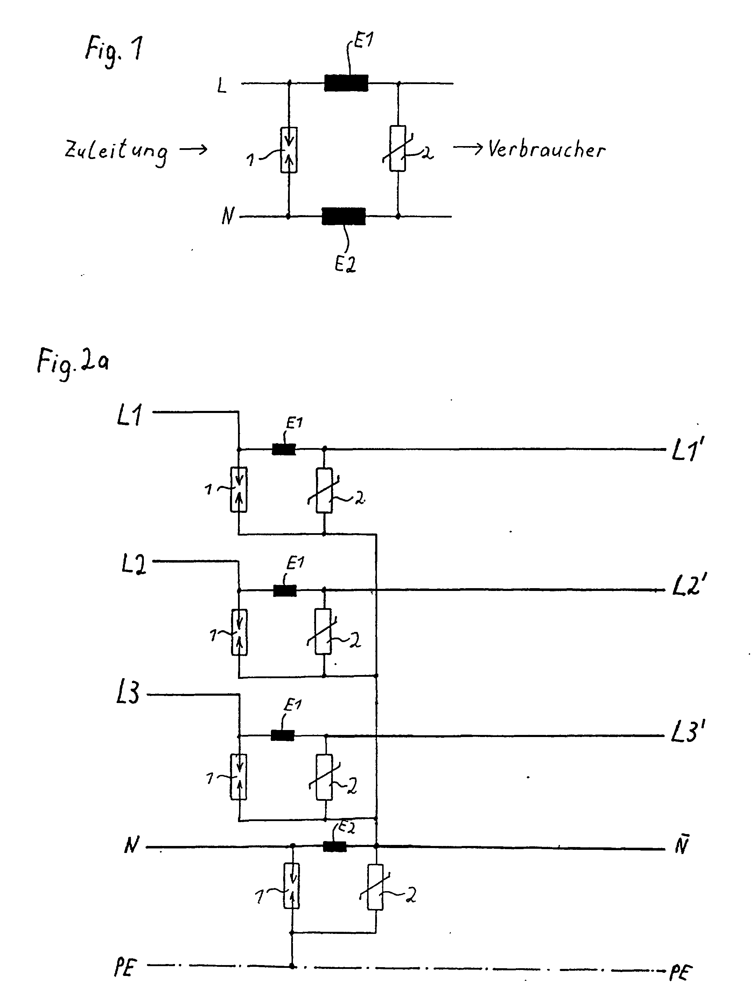

Um die positiven Eigenschaften beider Typen von Überspannungs-Ableitelementen gleichzeitig nutzen zu können, werden diese parallel geschaltet, also hintereinander "gestaffelt", eine dementsprechende Prinzipschaltung zeigt Fig.1.

Jenes Ableitelement 1, das die höhere Ableitleistung aufweist, wird näher der Zuleitung geschaltet, um dort den "Grobschutz" zu bilden. Dieses Bauelement leitet den Großteil der Überspannungsenergie ab, reduziert die Überspannung drastisch, in den meisten Fällen jedoch nicht ausreichend.

Die nach dem Grobschutz noch verbleibende Spannung wird von einem weiteren Ableitelement 2, dem "Feinschutz"-Bauelement, weiter verkleinert. Nachdem der Großteil der Überspannungsenergie bereits vom Grobschutz abgeleitet worden ist, ist die vom Feinschutz durchgeführte Spannungsreduktion mit nur mehr relativ geringer Energieableitung verbunden. Der Feinschutz sollte daher im wesentlichen eine geringere Restspannung als der Grobschutz aufweisen, eine besonders große Ableitleistung ist nicht mehr erforderlich.

Im Normalfall wird daher eine Staffelung von Überspannungs-Ableitelementen stets in der Weise durchgeführt werden, daß sie entsprechend der Höhe ihrer Restspannungen hintereinander geschaltet werden.

Bei einer derartigen Staffelung ist allerdings zu beachten, daß auch die Ansprechspannungen der eingesetzten Ableit-Elemente 1,2 voneinander verschieden sind. Ein Ableit-Bauelement mit geringerer Restspannung weist in der Regel auch eine geringere Ansprechspannung auf, sodaß beim Auftreten der Überspannung stets zuerst das "schwache" Bauelement (Feinschutz) anspricht und damit die Überspannung unter die Ansprechspannung des Grobschutzes reduziert.

In Verhinderung dieses Problems werden die Ableit-Elemente 1,2 voneinander entkoppelt, was durch Serienschaltung von Entkoppelgliedern E1,E2 zu dem "schwächeren" Ableitelement 2 erreicht wird. Die Entkoppelglieder E1,E2 können durch Spulen, Kondensatoren oder Widerstände gebildet sein und rufen einen zusätzlichen Spannungsabfall im Zweig des "Schwächeren" hervor, wodurch die Ansprechspannung des Feinschutzzweiges erhöht wird.

Soll ein Drehstrom-Anschluß mit einer derartigen Überspannungsschutz-Schaltung geschützt werden, so kann z.B. eine Anordnung nach Fig.2a vorgesehen sein. Es ist dabei zwischen jedem Phasenleiter L1, L2, L3 und dem Neutralleiter N wie auch zwischen Neutral- N und Schutzleiter PE eine jeweils gesonderte Schutz-Schaltung einzubauen.

Die in Fig.1 mit E2 bezeichneten zweiten Entkoppel-Elemente zwischen den Phasen- und dem Neutralleiter sind dabei nicht als separate Serien-Bauelemente ausgeführt. Der von ihnen hervorgerufene Spannungsabfall wird durch die ersten Entkoppel-Bauelemente E1 erzeugt, die entsprechend größer -im Fall von Spulen mit größerer Induktivität- dimensioniert sind.

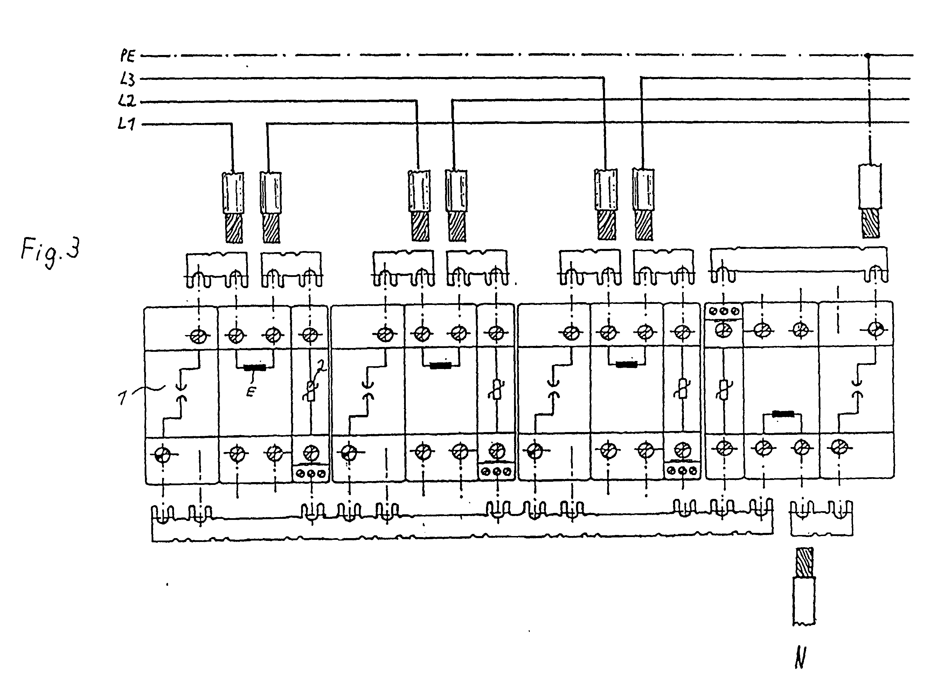

Eine eben beschriebene Anordnung führt zu einer komplizierten, material- und zeitaufwendig zu verdrahtenden Anordnung im Schaltkasten (vgl. Fig.3).

Wesentlicher Nachteil ist dabei, daß die Phasen- sowie der Schutzleiter L1, L2, L3, PE der Zuleitung von oben, der Neutralleiter N hingegen von unten an diese Schutzschaltung anzuschließen sind. Selbiges Problem ergibt sich für die zu den Verbrauchern weiterführenden Leitungen; Phasen- sowie Schutzleiter können von den oberen Klemmenreihen abgegriffen werden, der Neutralleiter muß jedoch an der unteren Klemmenreihe abgegriffen und weitergeführt werden.

In der Installationstechnik ist es jedoch wünschenswert, sämtliche Leitungen von Zu- und Ableitung einer Geräteanordung an deren obere Klemmenreihen anzuschließen und lediglich die innerhalb der Anordnung notwendigen elektrischen Verbindungen auf obere und untere Klemmenreihe aufzuteilen.

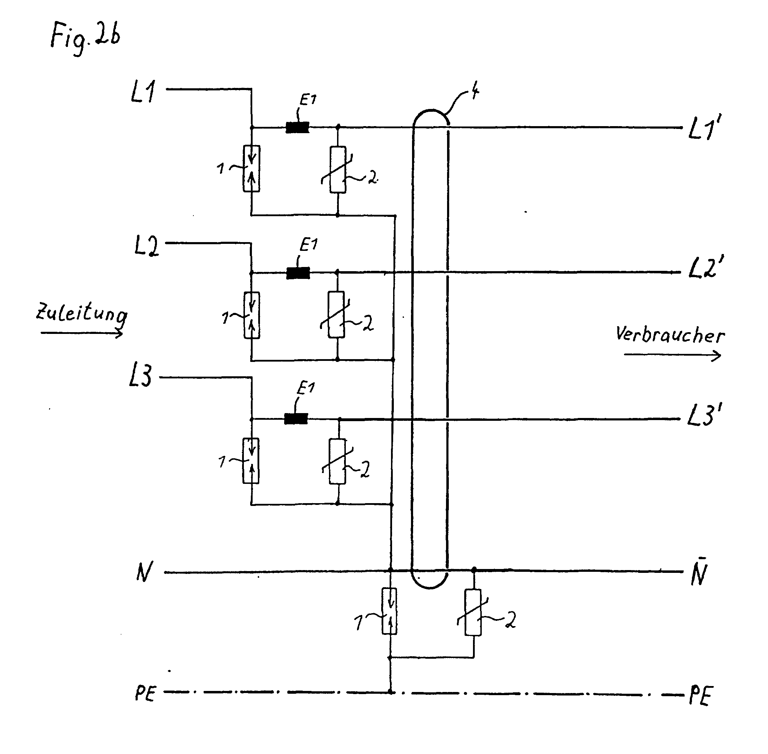

In der Schaltungsanordnung nach Fig.2b ist das in Fig.2a im Neutraleiter N angeordnete Entkoppel-Bauelement E2 nicht vorgesehen. Seine elektrische Wirkung wird von einer stromkompensierten Spule 4 übernommen. Diese Spule 4 ist in sich geschlossen und im einfachsten Fall durch einen induktiven Ring, wie z.B. eine Ferritring, gebildet. Sämtliche betriebstromführende Leiter, bei einem dreiphasigen Drehstromsystem also L1, L2, L3 und N, sind durch diese Spule 4 hindurchgeführt.

Ein solche Spule 4 hat in elektrotechnischer Hinsicht diegleiche Wirkung wie sternförmig an den Schutzleiter PE angeschlossene Serieninduktivitäten, bewirkt also für Ströme, die von einem der Leiter L1, L2, L3 oder N zum Schutzleiter PE hin fließen, einen Spannungsabfall und damit eine Entkoppel-Wirkung. Dadurch wird die Wirkung der ersten Entkoppel-Bauelemente E1 verstärkt, sodaß die Funktion der fehlenden Entkoppel-Bauelemente E2 teilweise oder zur Gänze durch die Spule 4 übernommen wird, die ersten Entkoppel-Bauelemente E1 daher dementsprechend kleiner dimensioniert werden können.

Wesentlicher Vorteil einer solchen stromkompensierten Spule 4 liegt darin, daß sie im störungsfreien Betrieb keine Wirkung hat und damit auch keine Verluste hervorruft -im Gegensatz dazu wird von Serieninduktivitäten auch im Normalbetrieb Blind(verlust)leistung aufgenommen.

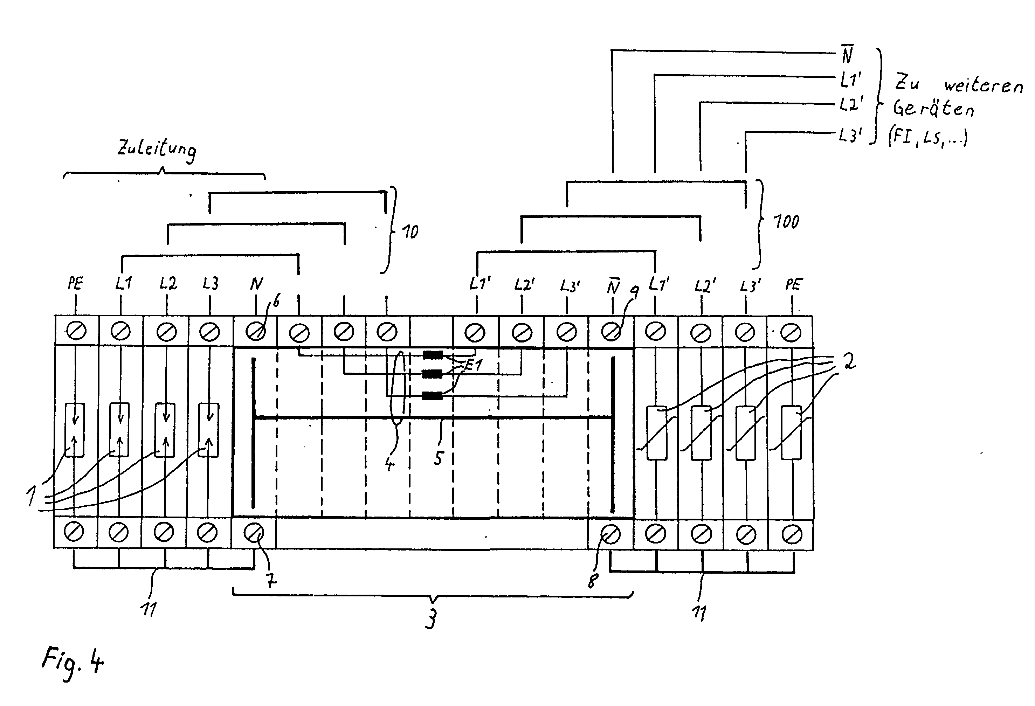

Erfindungsgemäß wird die Anordnung von Bauelementen einer Überspannungs-Schutzschaltung in einem Schaltkasten entsprechend Fig.4 getroffen. Diese Anordnung realisiert das in Fig.2b gezeigte Prinzipschaltbild.

Sämtliche erste 1 und sämtliche zweite Ableit-Elemente 2 sind jeweils unmittelbar nebeneinanderliegend zu Gruppen zusammengefaßt angeordnet. Örtlich zwischen diesen beiden Gruppen ist das Herzstück dieser Anordnung, das Entkoppel-Glied 3 vorgesehen.

Dieses vereint zumindest sämtliche ersten Entkoppel-Bauelemente E1 in einem gemeinsamen Gehäuse. In der in Fig.4 dargestellten Ausführungsform ist auch das zweite, als stromkompensierte Spule ausgeführte Entkoppel-Baulelement 4 im gemeinsamen Gehäuse angeordnet. Die ersten Entkoppel-Bauelemente E1 sind -so wie in Fig.2b dargestellt- in Serie zwischen Zu- und Ableitung angeordnet und bevorzugterweise als Spulen ausgebildet, könnten alternativ dazu jedoch auch durch Widerstände oder Kapazitäten realisiert sein.

Das zweite wesentliche Konstruktionsdetail des Entkoppel-Gliedes 3 ist die im Gehäuseinneren ausgeführte elektrische Verbindung 5 der äußersten Anschlußklemmen 6,7,8,9 der oberen und der unteren Klemmenreihe.

Durch ein auf beschriebene Weise gestaltetes Entkoppel-Glied 3 ergibt sich, wie aus der Zeichnung ersichtlicht, eine besonders einfache und übersichtliche Verdrahtung der gesamten Überspannungs-Schutzschaltung.

Werden die Gehäuse der einzelnen Bauelemente in genormter Breite hergestellt -in der Installationstechnik spricht man in diesem Zusammenhang von sog. "Teilungseinheiten"; jedes Gehäuse weist eine Breite, die ein ganzzahliges Vielfaches einer Teilungseinheit beträgt, auf- so gestalten sich die wenigen noch verbleibenden, extern herzustellenden Verbindungen so einfach, daß standardisierte Verschienungssysteme 10, 100 bzw. ebenso standardisierte Verbindungsbrücken 11 eingesetzt werden können, sodaß sich die Verdrahtungsarbeit im wesentlichen auf das Anziehen einiger Klemmschrauben reduziert. Darüberhinaus werden sämtliche Leitungen von Zu- als auch Ableitung an die oberen Klemmenreihen angeschlossen.

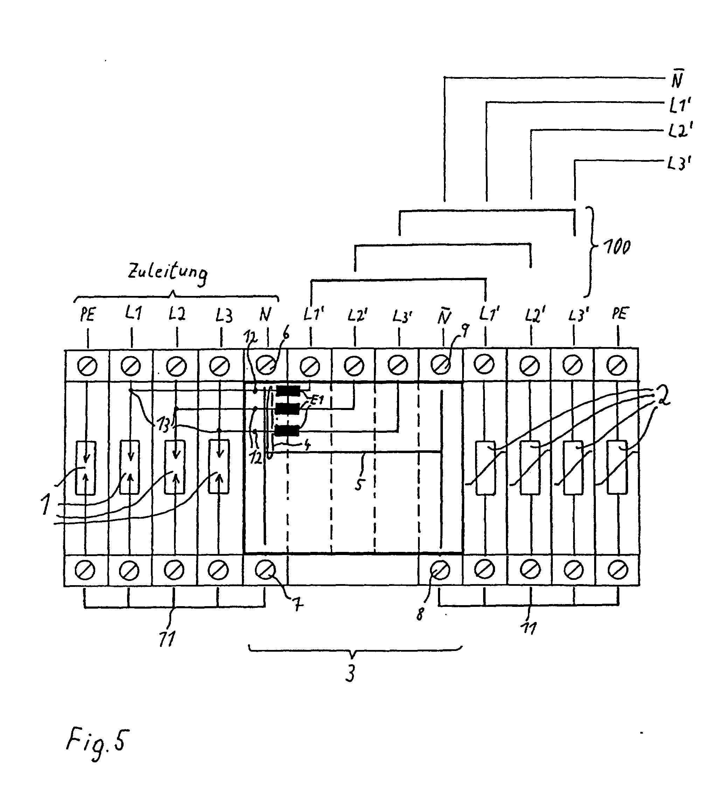

Die in Fig.4 dargestellte Ausführungsform, in der sowohl die ersten als auch die zweiten Anschlüsse der ersten Entkoppel-Bauelemente E1 auf in der oberen Klemmenreihe liegende Anschlußklemmen geführt sind, kann vereinfacht werden, und zwar indem sie in der in Fig.5 dargestellten Weise ausgebildet wird. Hierbei sind die ersten Anschlüsse der ersten Entkoppel-Bauelemente E1 auf in der Gehäusevorderwand angeordnete Steckkontakte 12 und die zweiten Anschlüsse der ersten Entkoppel-Bauelemente E1 auf in der oberen Klemmenreihe liegende Anschlußklemmen geführt.

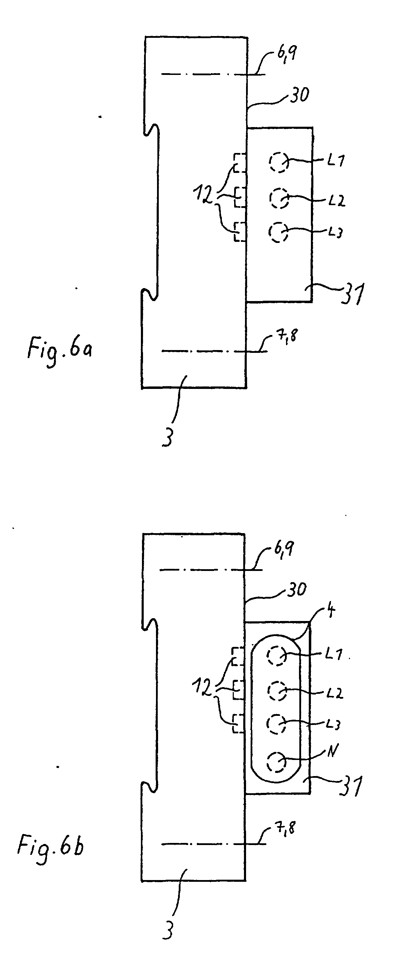

Auch die Gehäuse der ersten, in den Phasenleitem L1, L2, L3 angeordneten Ableitelemente 1 weisen an ihrer Gehäusevorderwand Steckkontakte 13 auf, welche mit den Phasenleitern L1, L2, L3 der Zuleitung verbunden sind. Dies erlaubt, die händisch anzulegende Verbindung 10 von Fig.4 durch einen Steckverbinder 31, der entlang der Gehäusevorderwände 30 verläuft, zu ersetzen (vgl. Fig.6a). Damit kann zum einen das Entkoppel-Glied 3 schmäler gestaltet werden, zum anderen entfallen weitere händisch zu verlegende Verbindungen.

Nachdem die die zweiten Entkoppel-Elemente E2 bildende Spule 4 relativ klein ist, kann sie, so wie in Fig.6b vorgesehen, innerhalb des Steckverbinders 31 angeordnet sein. Voraussetzung dazu ist natürlich, daß auch die elektrische Verbindungsleitung 5 der Neutralleiter-Anschlußklemmen 6,7,8,9 zumindest abschnittsweise im Steckverbinder 31 verläuft, um von der Spule 4 umgeben zu sein.

Eine nochmalige Weiterbildung der Erfindung führt dazu, daß sämtliche ersten Ableit-Elemente 1 mit dem Entkoppel-Glied 3 einstückig ausgebildet sind. Damit kann die extern anzuschließende Brücke 10 entfallen; wird auch der Steckverbinder 31 in die einstückige Ausbildung mit einbezogen, so kann auch dieser durch im Gehäuseinneren verlaufende Leitungen ersetzt werden.

Die ersten Entkoppel-Glieder E1, die vom Betriebsstrom der versorgten elektrischen Anlage durchflossen sind, müssen unter Berücksichtungung der vom Stromfluß hervorgerufenen Erwärmung dimensioniert werden. Damit nun für verschieden große Nennströme gleichartige und damit günstig herzustellende Entkoppel-Glieder 3 verwendet werden können, ist es wünschenswert, diese so auszubilden, daß sie zum Zweck eines höheren Gesamt-Stromdurchflusses auf einfache Weise parallel geschaltet werden können.

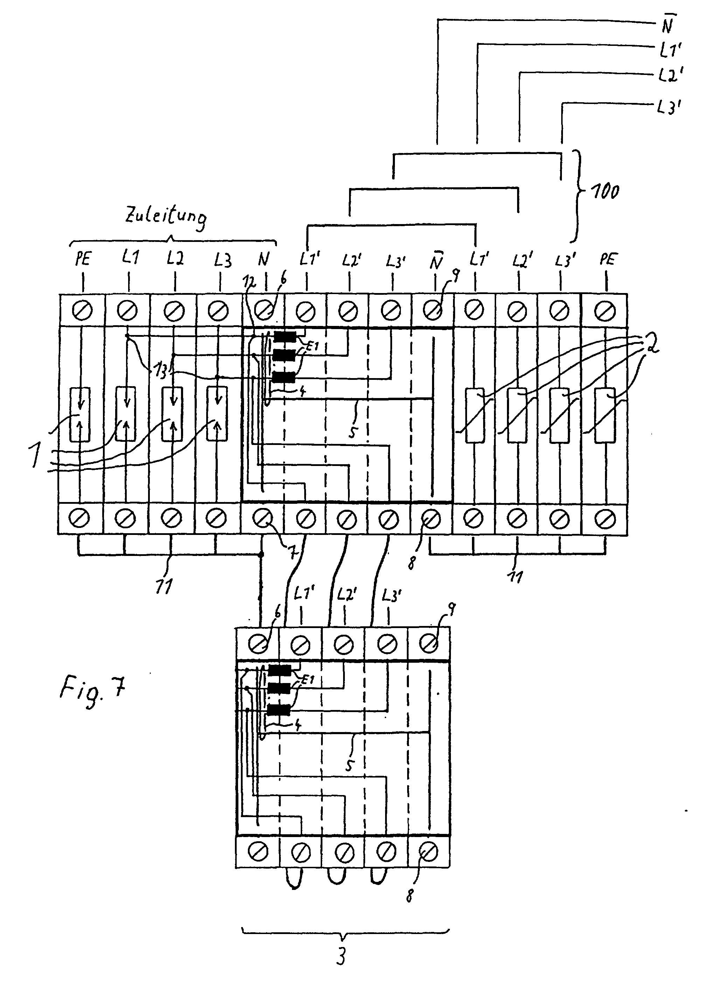

Dies erlaubt die in Fig.7 dargestellte Ausgestaltung der Erfindung. Hier sind die ersten Anschlüsse der ersten Entkoppel-Elemente E1 zusätzlich auch auf in der unteren Klemmenreihe liegende Anschlußklemmen geführt.

Zwei, gegebenenfalls auch mehrere parallelzuschaltende Entkoppel-Glieder 3 werden untereinanderliegend angeordnet und in der in der Zeichnung dargestellten Weise miteinander verbunden.

Wenngleich auch nicht in einer separaten Zeichnung dargestellt, kann auch die Ausgestaltung der Erfindung nach Fig.4 entsprechend Fig.7 weitergebildet werden, also die ersten Anschlüsse der ersten Entkoppel-Elemente E1 auf in der unteren Klemmenreihe liegende Anschlußklemmen geführt sein.

Prinzipiell können für die beiden Ableit-Elemente 1,2 alle eingangs erwähnten Bauelemente eingesetzt werden. Bevorzugt werden allerdings die ersten Ableit-Elemente 1 als Entladungsstrecken, wie z.B. Luft-, Gas- oder Vakuumfunkenstrecken od. dgl. und die zweiten Ableit-Elemente 2 durch Varistoren, Suppressordioden od. dgl. gebildet, wobei insbesondere eine Kombination Luft-Entladungsstrecke- Varistor verwendet wird.

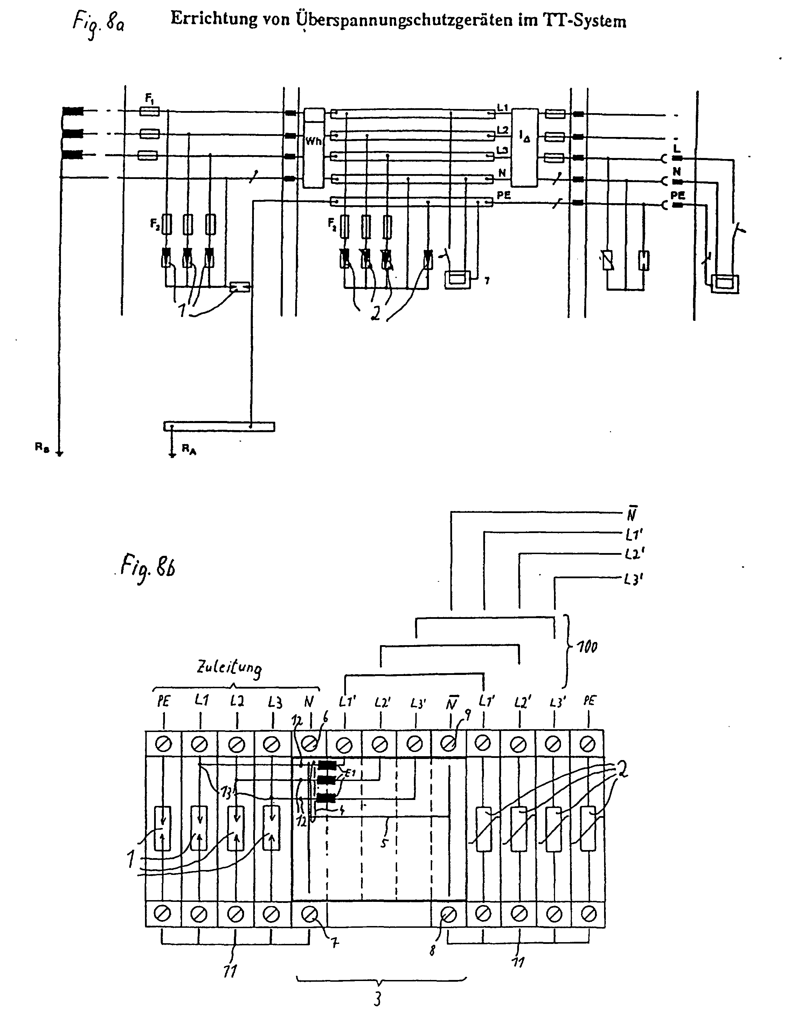

Das erfindungsgemäße Entkoppelglied als auch die erfindungsgemäße Anordnung von Bauteilen einer Überspannungs-Schutzschaltung sind besonders zweckmäßig für den praktischen Einsatz, weil damit eine Vielzahl von unterschiedlichen Schutzschaltungen für verschiedene Netz-Systeme aufgebaut werden kann. Dies soll abschließend anhand der Fig.8 bis 12 erläutert werden.

Fig.8a zeigt das Schaltbild einer Schutzschaltung für ein TT-System. Hier kann die bereits in Fig.5 dargestellte erfindungsgemäße Anordnung angewandt werden. Der Übersicht halber ist diese Anordnung nocheinmal in Fig.8b dargestellt.

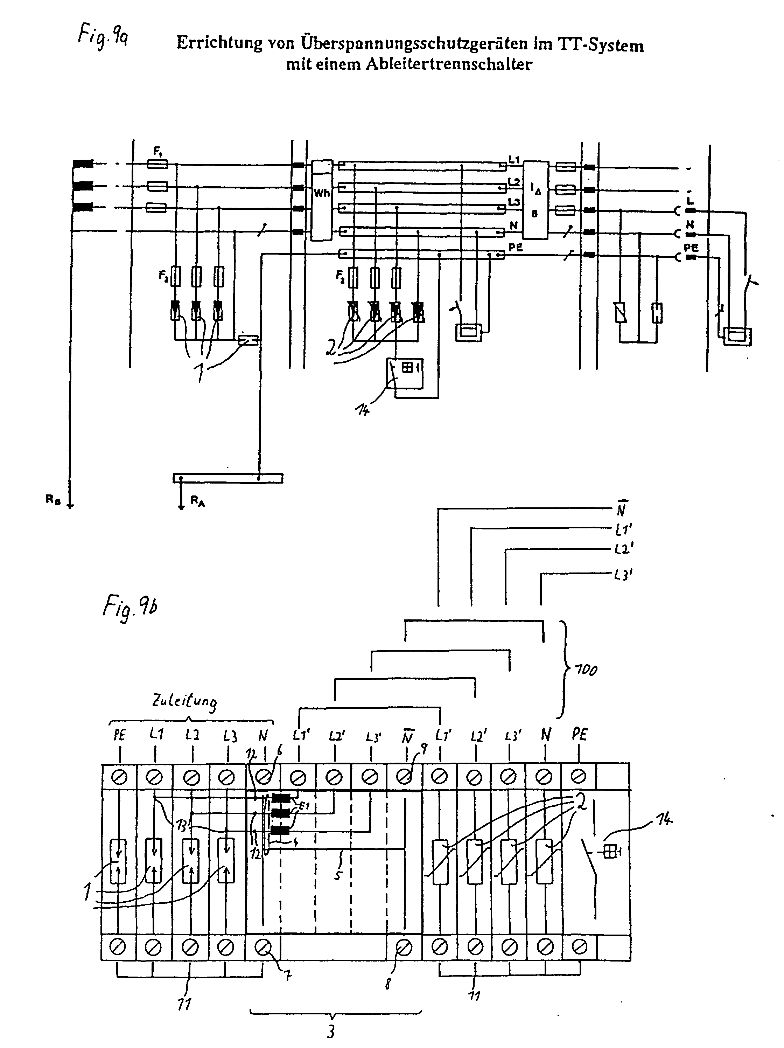

Fig.9a zeigt ein Schaltbild eines TT-Systems, bei welchem jedoch zusätzlich zu jenem gemäß Fig.8a ein Ableittrennschalter 14 vorgesehen ist. Die dieses Schaltbild realisierende erfindungsgemäße Schaltungsanordnung zeigt Fig.9b.

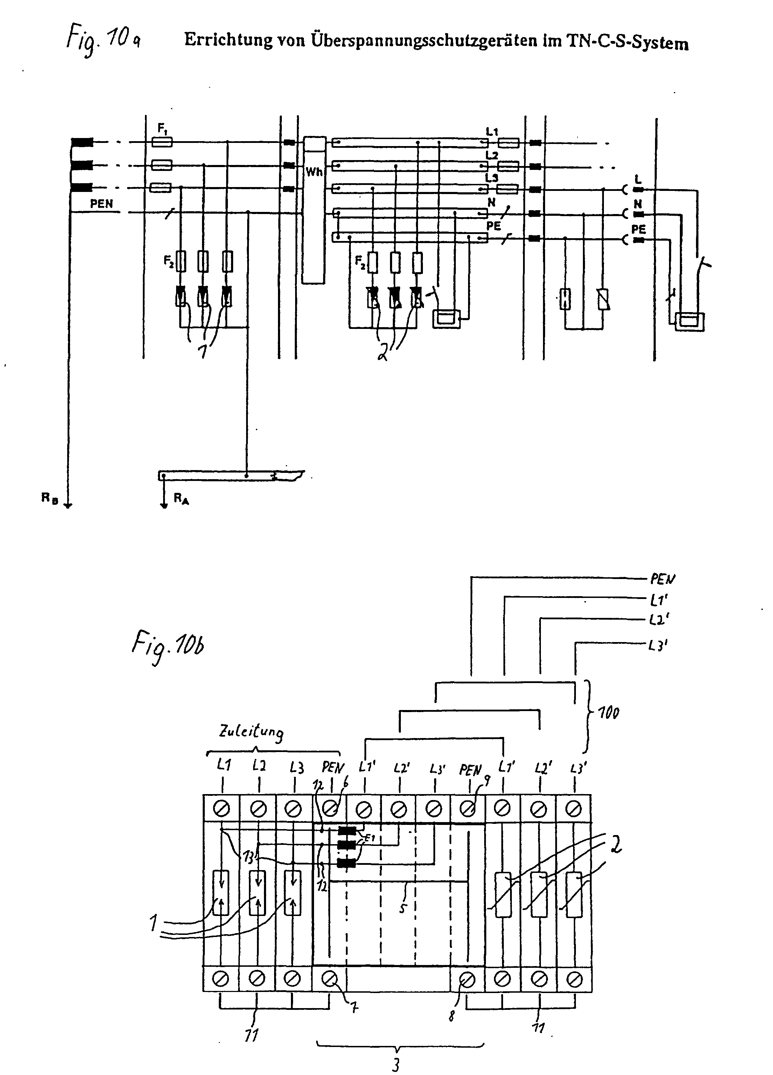

In Fig.10a ist eine Überspannungs-Schutzschaltung für ein TN-C-S-System gezeigt. Neutralleiter N und Schutzleiter PE sind hier miteinander verbunden, sodaß zwischen ihnen keine Spannungsdifferenz und damit auch keine Überspannung auftreten kann. Damit können sowohl die Ableit- als auch die Entkoppel-Elemente zwischen Neutral- N und Schutzleiter PE, also die Spule 4, entfallen. Dies ist auch in der Schaltkasten-Anordung nach Fig.10b berücksichtigt.

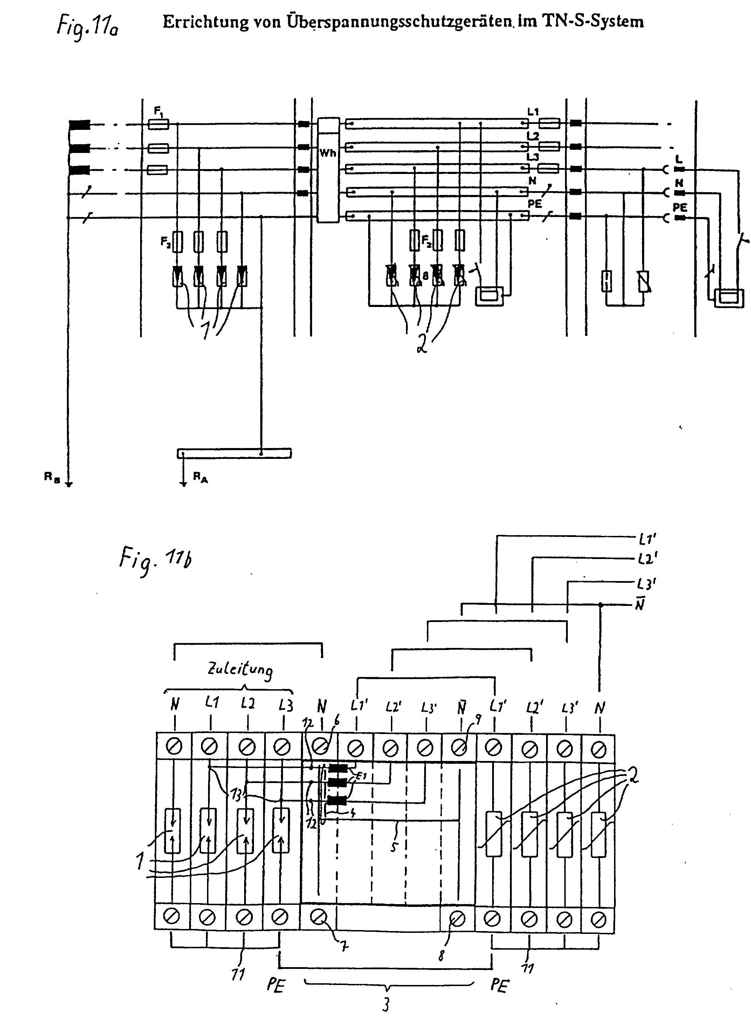

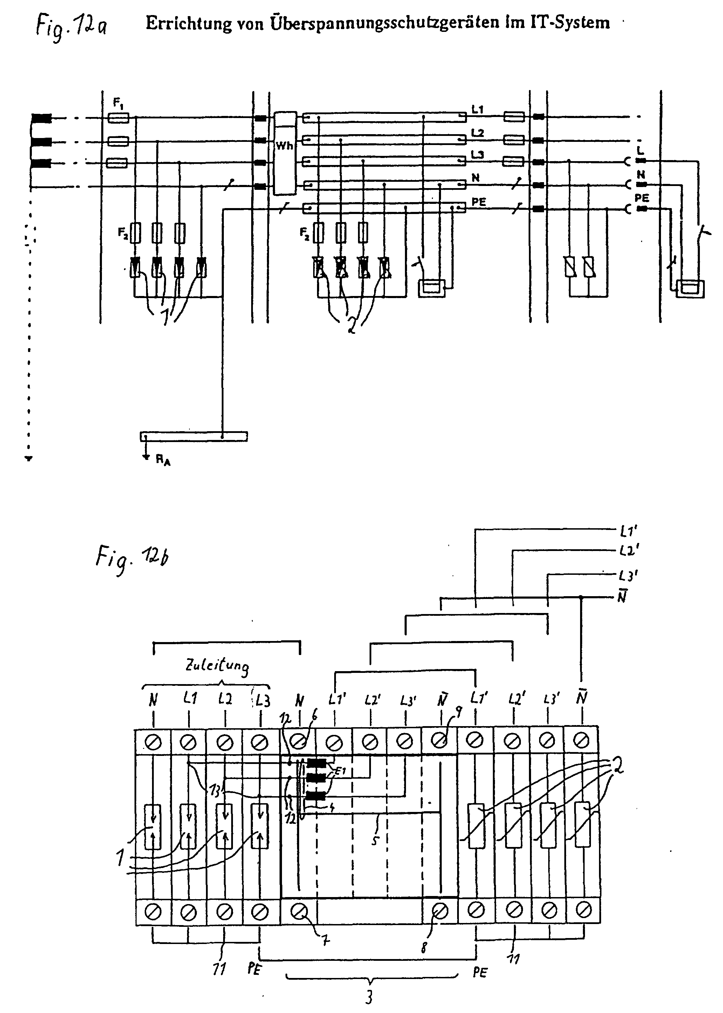

Fig.11a,b zeigen schließlich die Erfindung für ein TN-S-System und Fig.12a,b für ein IT-System. Hier sind jeweils zwei voneinander entkoppelten Überspannungs-Ableit-Elemente 1,2 zwischen jedem Phasenleiter L1,L2,L3 und dem Schutzleiter PE sowie zwischen Neutralleiter N und Schutzleiter PE geschaltet.

In den Zeichnungen sind zwar ausschließlich dreiphasige Drehstrom-Systeme dargestellt, die Erfindung ist jedoch nicht auf solche Systeme beschränkt. Auch für zweiphasige Anschlüsse, lediglich bestehend aus einem Phasen-, Neutral- und Schutzleiter, für Systeme ohne Neutralleiter usw. kann die Erfindung eingesetzt werden. Entsprechend der Anzahl der zu schützenden Leitungen des Systems ist lediglich die Anzahl der Ableit- und Entkoppelelemente zu variieren.

## Patentansprüche

1. Entkoppel-Glied (3) für in Schaltschränke einbaubare Überspannungs-Schutzschaltungen, welche Überspannungs-Schutzschaltungen erste und zweite Ableit-Elemente (1, 2) sowie zwischen den ersten und zweiten Ableit-Elementen (1, (2) liegende erste Entkoppel-Bauelemente (E1) umfassen, wobei das Entkoppel-Glied (3) ein Gehäuse aufweist, in welchem zumindest sämtliche ersten Entkoppel-Bauelemente (E1) angeordnet sind und gegebenenfalls zumindest ein zweites Entkoppel-Bauelement (4) angeordnet ist, **dadurch gekennzeichnet, daß** das Gehäuse des Entkoppel-Gliedes (3)
- in einer oberen Klemmenreihe liegende Anschlußklemmen (6, 9),
- in einer unteren Klemmenreihe liegende Anschlußklemmen (7, 8) aufweist,
wobei
- jede Klemmenreihe jeweils eine linke äußerste Anschlußklemme (6, 7) und eine rechte äußerste Anschlußklemme (9, 8) aufweist, und
- die äußersten Anschlußklemmen (6, 7, 8, 9) mittels einer im Gehäuseinneren geführten elektrischen Verbindungsleitung (5) verbunden sind.

2. Entkoppel-Glied (3) nach Anspruch 1, **dadurch gekennzeichnet, daß** das zumindest eine zweite Entkoppel-Bauelement (4) vorgesehen und zusammen mit den ersten Entkoppel-Bauelementen (E1) im gemeinsamen Gehäuse angeordnet ist.

3. Entkoppel-Glied nach Anspruch 1 oder 2, **dadurch gekennzeichnet, daß** sowohl die ersten als auch die zweiten Anschlüsse der ersten Entkoppel-Bauelemente (E1) auf in der oberen Klemmenreihe liegende Anschlußklemmen des gemeinsamen Gehäuses geführt sind.

4. Entkoppel-Glied nach Anspruch 1 oder 2, **dadurch gekennzeichnet, daß** die ersten Anschlüsse der ersten Entkoppel-Bauelemente (E1) auf in einer Gehäusevorderwand (30) angeordnete Steckkontakte (12) und die zweiten Anschlüsse der ersten Entkoppel-Bauelemente (E1) auf in der oberen Klemmenreihe liegende Anschlußklemmen geführt sind.

5. Entkoppel-Glied nach einem der Ansprüche 1 bis 4, **dadurch gekennzeichnet, daß** die ersten Anschlüsse der ersten Entkoppel-Bauelemente (E1) zusätzlich auch auf in der unteren Klemmenreihe liegende Anschlußklemmen geführt sind.

6. Entkoppel-Glied nach einem der Ansprüche 1 bis 5, **dadurch gekennzeichnet, daß** die ersten Entkoppel-Bauelemente (E1) durch Spulen gebildet sind.

7. Entkoppel-Glied nach einem der Ansprüche 1 bis 6, **dadurch gekennzeichnet, daß** zumindest ein zweites Entkoppel-Bauelement (4) vorgesehen und dieses durch eine in sich geschlossene Spule, vorzugsweise durch einen induktiven Ring, wie z.B. einen Ferritring, gebildet ist, durch welche Spule sämtliche betriebsstromführende Leiter (L1, L2, L3, N) hindurch geführt sind.

8. Anordnung von Bauelementen einer Überspannungs-Schutzschaltung in einem Schaltkasten, wobei jeweils zwischen jedem Phasenleiter (L1,L2,L3) und dem Neutralleiter (N) bzw. zwischen jedem Phasenleiter (L1,L2,L3) und dem Schutzleiter (PE) sowie vorzugsweise auch zwischen Neutralleiter (N) und Schutzleiter (PE) zwei voneinander entkoppelte Ableit-Elemente (1,2) geschaltet sind und ein Entkoppel-Glied (3) nach einem der Ansprüche 1 bis 7 vorgesehen ist, **dadurch gekennzeichnet, daß** sämtliche erste Ableit-Elemente (1) und sämtliche zweite Ableit-Elemente (2) jeweils unmittelbar nebeneinanderliegend zu Gruppen zusammengefaßt angeordnet sind und daß das Entkoppel-Glied (3) zwischen den Gruppen der ersten und der zweiten Ableit-Elemente (1,2) angeordnet ist.

9. Anordnung nach Anspruch 8 umfassend ein Entkoppelglied (3) nach Anspruch 3, **dadurch gekennzeichnet, daß** die ersten Anschlüsse der ersten Entkoppel-Bauelemente (E1) durch einen entlang von Gehäusevorderwänden (30) von Ableit-Elementen (1) und Entkoppel-Glied (3) verlaufenden Steckverbinder (31) verbindbar sind.

10. Anordnung nach Anspruch 9, **dadurch gekennzeichnet, daß** das zumindest eine zweite Entkoppel-Element (4) im Inneren des Steckverbinders (31) angeordnet ist.

11. Anordnung nach einem der Ansprüche 8, 9 oder 10, **dadurch gekennzeichnet, daß** sämtliche erste Ableit-Elemente (1) mit dem Entkoppel-Glied (3) einstückig ausgebildet sind.

12. Anordnung nach einem der Ansprüche 8 bis 11, **dadurch gekennzeichnet, daß** sämtliche erste Ableit-Elemente (1), Entkoppel-Glied (3) und Steckverbinder (31) einstückig ausgebildet sind.

13. Anordnung nach einem der Ansprüche 8 bis 12, **dadurch gekennzeichnet, daß** die ersten Ableit-Elemente (1) durch Entladungsstrecken, wie z.B. Luft-, Gas- oder Vakuumfunkenstrecken od. dgl. gebildet sind.

14. Anordnung nach einem der Ansprüche 8 bis 13, **dadurch gekennzeichnet, daß** die zweiten Ableit-Elemente (2) durch Varistoren, Suppressordioden od. dgl. gebildet sind.

## Claims

1. A decoupling element (3) for overvoltage protection circuits which can be installed in switch cabinets, which overvoltage protection circuits comprise first and second arrester elements (1, 2) as well as first decoupling components (E1) which are situated between the first and second arrester elements (1, 2), with the decoupling element (3) comprising a housing in which at least all first decoupling components (E1) are arranged and optionally at least a second decoupling element (4) is arranged, **characterized in that** the housing of the decoupling member (3) comprises
- connection terminals (6, 9) situated in an upper row of terminals;
- connection terminals (7,8) situated in a lower row of terminals, with
- each row of terminals comprising a left outermost connection terminal (6, 7) and a right outermost connection terminal (9, 8), and
- the outermost connection terminals (6, 7, 8, 9) being connected by means of an electric connecting lead (5) guided in the interior of the housing.

2. A decoupling element (3) as claimed in claim 1, **characterized in that** the at least second decoupling component (4) is provided and is arranged together with the first decoupling components (E1) in the common housing.

3. A decoupling element as claimed in claim 1 or 2, **characterized in that** both the first as well as the second connections of the first decoupling components (E1) are guided in connection terminals of the common housing, which terminals are situated in the upper row of connection terminals.

4. A decoupling element as claimed in claim 1 or 2, **characterized in that** the first connections of the first decoupling components (E1) are guided on plug-in contacts (12) arranged on the front wall (30) of the housing and the second connections of the first decoupling component (E1) are guided on connection terminals situated in the upper row of connection terminals.

5. A decoupling element as claimed in one of the claims 1 to 4, **characterized in that** the first connections of the first decoupling components (E1) are additionally also guided on connection terminals situated in the lower row of terminals.

6. A decoupling element as claimed in one of the claims 1 to 5, **characterized in that** the first decoupling components (E1) are formed by coils.

7. A decoupling element as claimed in one of the claims 1 to 6, **characterized in that** at least a second decoupling component (4) is provided and the same is formed by an inherently closed coil, preferably by an inductive ring such as a ferrite ring, through which coil are guided all conductors (L1, L2, L3, N) which conduct operating current.

8. An arrangement of components of an overvoltage protection circuit in a switch cabinet, with two mutually decoupled arrester elements (1, 2) each being switched between every phase conductor (L1, L2, L3) and the neutral conductor (N) or between every phase conductor (L1, L2, L3) and protective earth conductor (PE) and preferably also between the neutral conductor (N) and the protective earth conductor (PE) and a decoupling element (3) being provided according to one of the claims 1 to 7, **characterized in that** all first arrester elements (1) and all second arrester elements (2) are each combined directly adjacently into groups and that the decoupling element (3) is arranged between the groups of the first and second arrester elements (1,2).

9. An arrangement according to claim 8, comprising a decoupling element (3) according to claim 3, **characterized in that** the first connections of the first decoupling components (E1) are connectable by means of a plug-in connector (31) which extends along the front housing walls (30) of arrester elements (1) and decoupling element (3).

10. An arrangement as claimed in claim 9, **characterized in that** the at least second decoupling element (4) is arranged in the interior of the plug-in connector (31).

11. An arrangement as claimed in one of the claims 8, 9 or 10, **characterized in that** all first arrester elements (1) are arranged integrally with the decoupling element (3).

12. An arrangement as claimed in one of the claims 8 to 11, **characterized in that** all first arrester elements (1), decoupling element (3) and plug-in connector (31) are arranged integrally.

13. An arrangement as claimed in one of the claims 8 to 12, **characterized in that** the first arrester elements (1) are formed by discharge paths such as spark gaps in air, gas or vacuum or the like.

14. An arrangement as claimed in one of the claims 8 to 13, **characterized in that** the second arrester elements (2) are formed by varistors, suppressor diodes or the like.

## Revendications

1. Organe de découplage (3) pour des limiteurs de surtension destinés à être installés dans des armoires de commande et comprenant des premiers et des seconds éléments de dérivation (1, 2) ainsi que des premiers éléments de découplage (E1) situés entre les premiers et les seconds éléments de dérivation (1, 2), l'organe de découplage (3) comportant un boîtier à l'intérieur duquel sont disposés au moins tous les premiers éléments de découplage (E1) et le cas échéant au moins un second élément de découplage (4), **caractérisé en ce que** le boîtier de l'organe de découplage (3) comporte
- des bornes de raccordement (6, 9) situées dans une rangée supérieure de bornes,
- des bornes de raccordement (7, 8) situées dans une rangée inférieure de bornes,
- chaque rangée de bornes comportant une borne de raccordement située à l'extrême gauche (6, 7) et une borne de raccordement située à l'extrême droite (9, 8) et
- les bornes de raccordement d'extrémité (6, 7, 8, 9) étant reliées par une ligne de connexion électrique (5) guidée à l'intérieur du boîtier.

2. Organe de découplage (3) selon la revendication 1, **caractérisé en ce qu'**au moins un des deuxièmes éléments de découplage (4) est prévu et est disposé avec les premiers éléments de découplage (E1) dans le boîtier commun.

3. Organe de découplage selon la revendication 1 ou 2, **caractérisé en ce que** les premiers ainsi que les deuxièmes câbles de raccordement des premiers éléments de découplage (E1) sont guidés jusqu'à des bornes de raccordement situées dans la rangée supérieure de bornes dans le boîtier commun.

4. Organe de découplage selon la revendication 1 ou 2, **caractérisé en ce que** les premiers câbles de raccordement des premiers éléments de découplage (E1) sont guidés jusqu'à des contacts à fiches (12) disposés dans une paroi avant du boîtier (30) et que les seconds câbles de raccordement des premiers éléments de découplage (E1) sont guidés jusqu'à des bornes de raccordement situées dans la rangée supérieure de bornes.

5. Organe de découplage selon l'une quelconque des revendications 1 à 4, **caractérisé en ce que** les premiers câbles de raccordement des premiers éléments de découplage (E1) sont de plus également guidés jusqu'à des bornes de raccordement situées dans la rangée inférieure de bornes.

6. Organe de découplage selon l'une quelconque des revendications 1 à 5, **caractérisé en ce que** les premiers éléments de découplage (E1) sont formés par des bobines.

7. Organe de découplage selon l'une quelconque des revendications 1 à 6, **caractérisé en ce qu'**au moins un deuxième élément de découplage (4) est prévu et que celui-ci est formé par une bobine fermée, de préférence par un anneau d'induction, un anneau en ferrite par exemple, tous les conducteurs de courant de service (L1, L2, L3, N) étant guidés à travers ladite bobine.

8. Arrangement d'éléments d'un limiteur de surtension dans un boîtier de manoeuvre, deux éléments de dérivation (1, 2) découplés étant connectés entre chaque conducteur de phase (L1, L2, L3) et le conducteur neutre (N), ou entre chaque conducteur de phase (L1, L2, L3) et le conducteur de protection (PE), et de préférence aussi entre le conducteur neutre (N) et le conducteur de protection (PE), et un organe de découplage (3) selon l'une quelconque des revendications 1 à 7 étant prévu, **caractérisé en ce que** tous les premiers éléments de dérivation (1) et tous les seconds éléments de dérivation (2) sont regroupés de manière à être directement adjacents et que l'organe de découplage (3) est disposé entre les groupes de premiers et de seconds éléments de dérivation (1, 2).

9. Arrangement selon la revendication 8 comprenant un organe de découplage (3) selon la revendication 3, **caractérisé en ce que** les premiers câbles de raccordement des premiers éléments de découplage (E1) sont destinés à être reliés par un connecteur (31) s'étendant le long de parois avant de boîtier (30) des éléments de dérivation (1) et de l'organe de découplage (3).

10. Arrangement selon la revendication 9, **caractérisé en ce que** l'au moins un second élément de découplage (4) est disposé à l'intérieur du connecteur (31).

11. Arrangement selon l'une quelconque des revendications 8, 9 ou 10, **caractérisé en ce que** tous les premiers éléments de dérivation (1) sont solidaires de l'organe de découplage (3).

12. Arrangement selon l'une quelconque des revendications 8 à 11, **caractérisé en ce que** tous les premiers éléments de dérivation (1), l'organe de découplage (3) et le connecteur (31) sont solidaires.

13. Arrangement selon l'une quelconque des revendications 8 à 12, **caractérisé en ce que** les premiers éléments de dérivation (1) sont formés par des espaces de décharge, par exemple des distances d'air, des distances de gaz ou des distances explosives sous vide ou autres.

14. Arrangement selon l'une quelconque des revendications 8 à 13, **caractérisé en ce que** les seconds éléments de dérivation (2) sont formés par des varistances, des diodes suppresseuses ou autres.
